# EUROPEAN PATENT SPECIFICATION

(11) **EP 2 020 810 B1**
(45) Date of publication and mention of the grant of the patent: **18.06.2014**
(21) Application number: 07386019.9
(22) Date of filing: 02.08.2007
(51) Int. Cl.: H04M 1/275

(54) **Signal generation device for use in a telephony network**
Signalerzeugungsvorrichtung zur Verwendung in einem Telefonienetzwerk
Dispositif de génération de signaux à utiliser dans un réseau de téléphonie

(43) Date of publication of application: 04.02.2009
(73) Proprietor: InAccess Networks SA, 15125 Maroussi (GR)
(72) Inventor: Georgopoulos, Christos, 15232 Halandri (GR)
(74) Representative: Barnfather, Karl Jon

(56) References cited:
- FR-A- 2 863 804
- GR-B- 1 005 579
- US-A- 5 818 930
- US-A1- 2004 032 948
- US-B1- 6 498 847

## Description

The invention relates to a device for generating signals for transmission over a telephony network, such as DTMF (dual tone multi-frequency) sequences with a reprogramming option, particularly but not exclusively for use as an electronic telephony card having functionality such as a prepaid telephony card, shortcut of phone numbers directory, televoting device and/or customer certification device.

It is known to provide DTMF sequence generation devices. For example US5818930 provides a communication device that allows the transmission and reception of DTMF tones through the telephony network. However, the device described is rather complex and alters the characteristics of the transmitted DTMF tones in order to encode the transmitted data. The device comprises many components including among others a DTMF encoder 110, RAM 108, ROM 106 and a combined microphone/speaker 114 for the DTMF reception and playback. An alternative implementation is also described that has a separate microphone, used for the DTMF reception and a combined microphone/speaker, used for the DTMF playback, thus allowing the concurrent reception and playback of DTMF tones. As such the device is somewhat complex. See also US 2004/0032948 A1 (DTMF generation) and US 2003/108188 A1 and WO 99/63733 A1 (DTMF generation by pulse width modulation).

The invention seeks to provide a less complex device than is known in the prior art, being a cost effective, readily disposable, recyclable and or portable device enabling communication of stored and reprogrammable signals over a telephony network. The invention provides an easy to use and simple user interface as well as providing a range of functionality for different uses. Aspects and features of the invention are set out in the accompanying claims.

In particular, the invention provides to value added services for a telephony network, using an electronic device, which generates sequences of DTMF tones, implementing thus an electronic telephone card of multiple applications. The generated DTMF tones are used for calling telephone numbers but also for communicating with the intelligent services platform (IN Platform) of a service provider. Moreover, this device is capable of having the DTMF sequences reprogrammed by the platform through the telephony network. The generated DTMF sequences are used first for calling the required telephone number for the connection with the IN platform and then for the transmission of special DTMF sequences, depending on the supported service.

The value added services for the telephony network is the use of the device as one or more of:
i) an electronic prepaid calling card,
ii) an electronic shortcut card of the phone numbers directory,
iii) an electronic televoting card, and
iv) an electronic card for identification and/or certification of users/customers.

Embodiments of the invention will now be described by way of example only, with reference to the accompanying drawings, in which:
Figure 1 is a schematic block diagram of a device 10 according to the invention forming part of a communications path with a platform 38;
Figures 2 and 3 are schematic perspective views of the front and rear of a device 10;
Figures 4 to 7 are flow diagrams of steps taking in performing certain of the functionality of the device 10; and
Figure 8 is a flow diagram of the sequence of reprogramming the device.

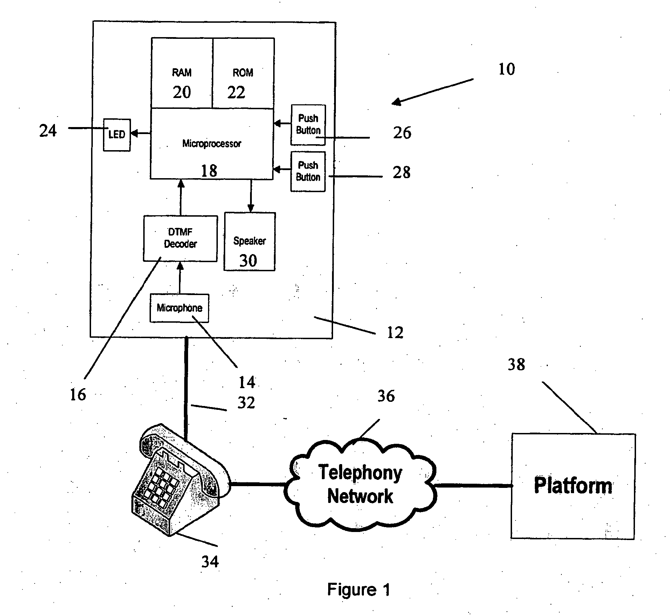

Referring to Figure 1 there is shown a device 10 according to the invention for generating telephony signals such as DTMF sequences, comprising a small body or casing, housing electronic components, including a telephony signal input, here in the form of a microphone 14 for detecting audible telephony signals such as DTMF sequences, and a decoder for converting the detected signal into a suitable form for communication with a processor 18. The processor 18 is preferably a programmable component such as a microprocessor which preferably comprises a temporary and permanent storage for electronically saving telephony signals, such as memory devices including a RAM 20 and a ROM 22 such as an EEPROM. The processor 18 can be an ATtiny 2313 from Atmel's AVR family, which is an 8-bit processor that includes 2KBytes of Flash memory, 128 Bytes of EEPROM and 128 Bytes of SRAM The processor also has timers/counters, interrupt unit, PWM channels, serial interfaces, etc. The device 10 preferably further comprises a simple user interface, here comprising a status indicator in the form of a single LED 24, and two user actuators here in the form of simple electrical push buttons 26 and 28. Device 10 further comprises a telephony output device, here in the form of a speaker 30 drivable directly by the processor for example using a pulse width modulation (PWM) technique thereby to generate audible DTMF sequence outputs from the speaker 30. The device 10 is powered by a solid state battery such as a 3V coin battery with 20mm diameter (like CR2016, CR2025 or equivalent type).

Device 10 is arranged to receive incoming DTMF sequences via microphone 14, to decode these using decoder 16 for communication with processor 18 which is adapted (if activated to do so) to store the DTMF sequence, or at least an electronic representation thereof, in its memory 20, 22. The DTMF sequences can be representative of multi-digit telephone numbers, account numbers and or PIN (personal identification number) for example. The user interface enables a user to cause device 10 to transmit stored DTMF signals via speaker 30, or to enter a programming mode in which the device 10 saves newly detected DTMF sequences.

In a preferred form device 10 communicates audibly with a telephone 34 - here represented visually via a communications path 32 - which telephone 34 is connected or connectable to a telephony network (such as a landline or cellular telephony network) enabling communication with a platform 38 such as an intelligent network (IN) platform operated by a telecommunications company, a media marketing company or the like.

Device 10 is preferably configured to store a first telephony signal (for example of a platform dial in number, or account number) which is transmitted when a first button 26 is actuated by a user and a second telephony signal (for example a PIN) which is transmitted when a second button 28 is actuated. However, more than two numbers can be stored and transmitted upon actuation of different predetermined user commands. For example processor 18 can be configured such that a single button can cause a first signal and then a second signal to be transmitted upon serial depression one after the other of the button 26 or 28. Alternatively or as well, actuation of a button for a longer period may cause transmission of a different predetermined signal for example the first being sent for an actuation less than 3 seconds and a second for an actuation of a button 26, 28 longer than 3 seconds. Moreover different signals can be transmitted according to the sequence in which the buttons are depressed such as 26 then 28 within 3 seconds, or 28 then 26 within 3 seconds. Beneficially, audible instructions regarding immediate use of device 10 can be provided to a user via telephone 34, eg after a user has gained access to platform 38, for example by first pressing button 26 in order to dial the appropriate telephone number, then pressing button 28 in order to provide platform 38 with the customer's identity number (or PIN). In the event of a change to the service, for example a change in the user's required telephone number for the user to access the appropriate platform for their available service, and/or to update their PIN number for example due to renewal of a service fee, the user can be informed by a pre-recorded audio message initiated by platform 38 to play over the earpiece of telephone 34, to place device 10 into reprogramming mode for example by depressing both buttons 26 and 28 simultaneously.

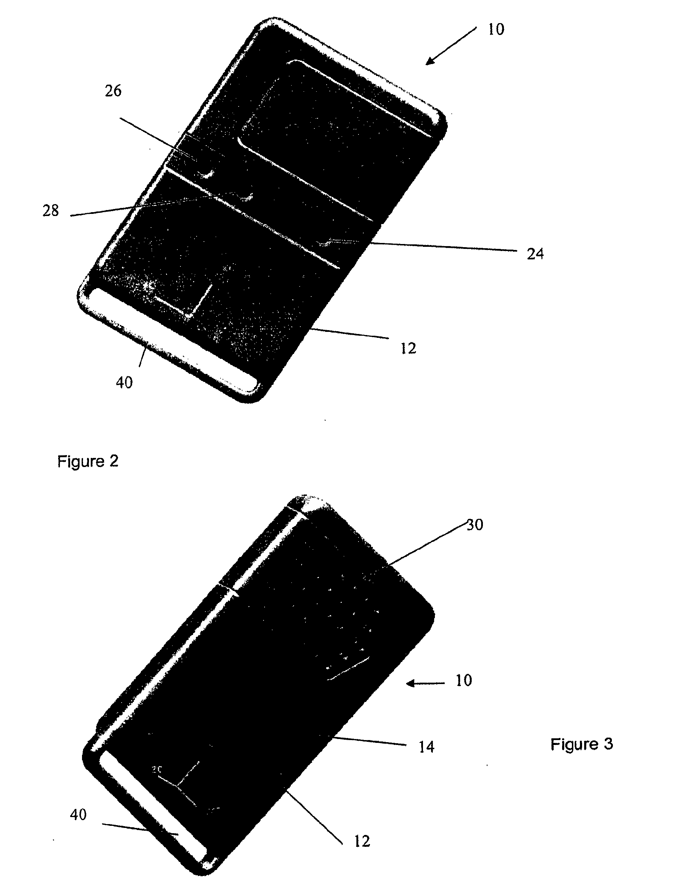

Preferably device 10 comprises a small body or casing 12 which can for example be made of plastics and conveniently to be held on a key ring for example. Accordingly, device 10 preferably comprises an aperture 40 for locating the device 10 on a key ring. Dimensionally device 10 is preferably approximately 20mm wide, 40mm long and 6mm deep. In a preferred form, the primary user interface features (here buttons 26, 28 and LED 24) are provided on a first face of device 10 whilst microphone 14 and speaker 30 are located adjacent a second, or reverse face of device 10, as shown in figures 2 and 3 respectively. Accordingly, the user can interact with device 10 using the user interface whilst at the same time having the device 10 located adjacent to the appropriate speaker or microphone of a telephone such as traditional telephone 34 shown in figure 1. Preferably, at least part of casing 12 is removable to enable changing of the battery which powers the electronics components. In one form, the block casing 12 is separable in two parts to enable removal and replacement of a battery.

The service implemented by the device 10 depends on the DTMF sequences that it generates. Four services are identified below:

### Electronic prepaid calling card

For the call set-up with an intelligent services platform 38, the user has to call a number of the form "807 XXXX" or "800 XX XXXXX" or "90X XX XXXXX". The exact number format depends on the country. Then, in most applications, the user should dial in his PIN using a normal telephone 34, in order to certify the identity of the caller. The PIN number has quite a lot of digits (usually 12 or more), so dialing it in the normal telephone is a rather complex process, with increased probability of error from the user.

Especially for the call set-up using a conventional prepaid calling card (the first application of the device), the user has to buy a calling card on which a PIN is printed. The user, having this card, should first call, without charge, a number of the form "807 XXXX" or "800 XX XXXXX" or other, to be connected to the IN platform 38. Then the IN platform 38 undertakes the guidance of the user via recorded voice messages up to the completion of the call of the telephone number and asks from the user to dial to his telephone 34 the PIN in order to declare the identity of the prepaid calling card to the IN platform. When the prepaid time of the card is consumed, the user should buy a new one, which has its own PIN number, different from the one of the previous card.

The DTMF generation device 10 has the advantage that when pressing one of its keys, it can generate a different sequence of DTMF tones. Different sequence can be also generated in other ways, as with extended or with the second push of the same key. Thus the user has the capability to be connected to the IN platform 38 by pressing a key 26, 28, since the generated DTMF sequence corresponds to the platform's telephone number. By pressing another key 26, 28 the user can send to the platform his PIN, in the case that this is required. In this way the process of dialing the calling number is simplified and accelerated and the probability of importing an erroneous PIN number is eliminated. Moreover, the DTMF sequence generation device 10 has the possibility of reprogramming the generated DTMF sequences, therefore the change of the called telephone numbers or sent PIN is possible.

When this device 10 is used as an electronic prepaid calling card, it has the advantage that, by pressing a key 26, 28, the user can call the platform's telephone number, while, by pressing another key, he can send to the platform 38 the PIN number of the card. This way required process presently of dialing the calling number is simplified and accelerated and the probability of sending an erroneous PIN number is eliminated. Moreover, the device 10 when used as an electronic prepaid calling card offers the possibility of renewing its telephony credit from the platform 38 via special processes, so that the purchase of a new card, when the initially prepaid calling time is consumed, is not required.

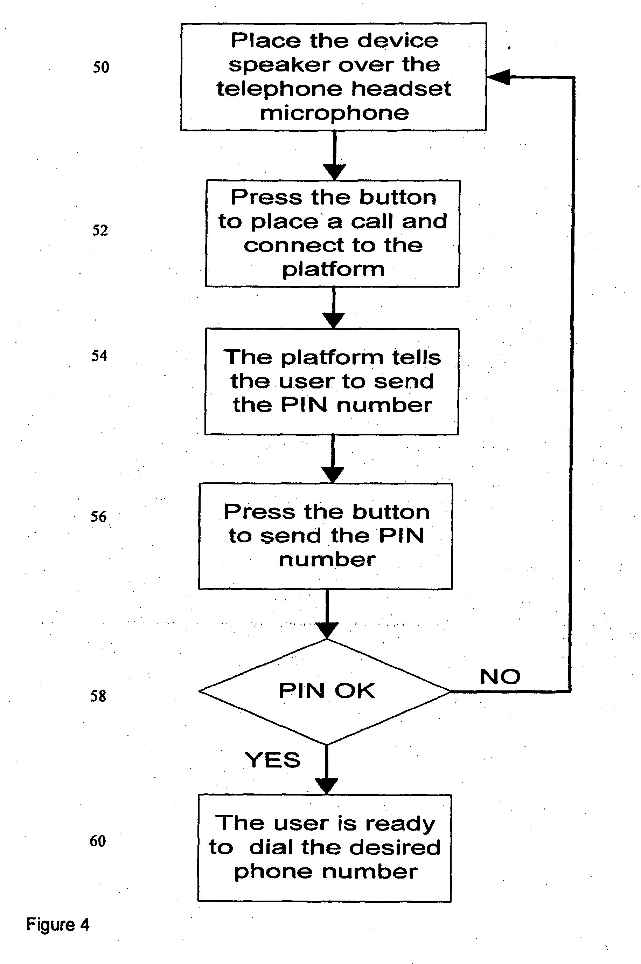

The DTMF sequence generation device 10 is an electronic device that is constituted of two or more keys 26, 28, an indication LED 24 that declares the status of the device, a loudspeaker 30, a microphone 14, the essential circuits for the control of the parts mentioned above and it is supplied by a battery that gives it large autonomy. A flow diagram of the operation of device 10 as an electronic prepaid calling card is shown in figure 4 at step 50 the user places the device speaker 30 over the telephone handset microphone, at step 52 the user presses the button to place a call and connects to platform 38 (for example by lifting a receiver of the traditional telephone 34 connected to telephony network 36 or by pressing "make a call" button of a mobile phone for example). At step 54 platform 38 tells the user to send the pin number and hence at step 56 the user presses the appropriate button to send the pin number. At step 58 the platform 38 determines whether or not the pin is acceptable; if not the user is informed to start the process again and hence return to step 50, but if acceptable the user is informed to dial his desired phone number. At step 60 the user is ready to dial the desired number using the phone 34.

Two or more, according to the number of keys 26, 28, different and independent DTMF sequences can be generated from the loudspeaker 30 of the device 10, when the user presses each one of its keys 26, 28. If during the generation of these DTMF sequences the loudspeaker 30 is placed near the microphone of the telephone handset 34, which is connected to the telephony provider, then the number that corresponds to this DTMF sequence is dialed automatically. This way, in the case of the electronic prepaid calling device 10, there is the possibility of calling the access number to the prepaid telephony service by pressing its first key 26 in order to connect to the platform 38, and sending the PIN number by pressing the second key 28. The process of calling the number and sending the PIN lasts less than 5 seconds.

### Electronic shortcut card

The second application of the device 10 is its use as an electronic shortcut card for a personal telephone directory (catalogue). For several reasons the users of telephone connections have the need for repeatedly calling certain telephone numbers. For example, calling relatives process, which especially in case of emergency should be easy and fast.

When the device 10 is used as an electronic shortcut card of the telephone directory, it has the advantage that today's required process of dialing the calling number is simplified and accelerated. The process of calling becomes as easy as pressing a key 26, 28 and the probability of dialing a wrong number is eliminated. Moreover the device 10 has the possibility of renewing the telephone numbers that are called.

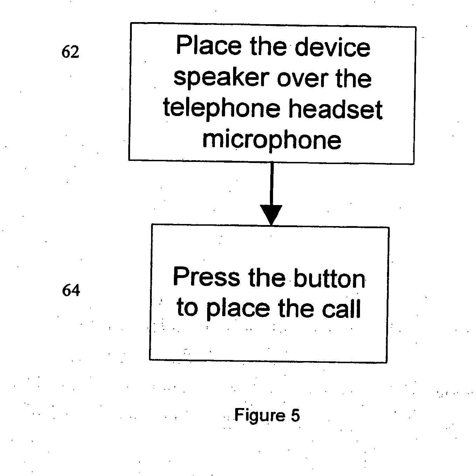

When the device 10 is used as an electronic shortcut card of the telephone directory, there is the possibility of calling a number by pressing a key 26, 28, as described above. Respectively, other keys can correspond to other numbers thus creating a small agenda of the most useful numbers per user. A flow diagram of the steps required by a user in using device 10 in this matter as shown in figure 5. At step 62 the user places the device 10 adjacent to telephone 34 so that the speaker 30 is close to the telephone microphone. At step 64 the user presses an appropriate button to place the call. It should be noted that casing 12 can be adapted to carry appropriate inditia or signs informing the user which button affects transmission of the account number or pin number for example.

### Electronic televoting card

The third application of the device 10 is emulating an electronic televoting card. Mass Media often carry out voting by means of telephone calls. The audience is requested to answer in a question or participate in a competition, usually by calling a number of the form 90xxxx (or other depending on the country), or sending an SMS with a certain text to a certain 4 digit number. The process for the TV watcher/listener is extremely difficult, since the telephone call numbers are different for each answer and for each voting/competition.

When the device 10 is used as an electronic televoting card, it has the advantage that the voting process is simplified and accelerated. The numbers are usually the same and the spectator does not have to take a note of the calling numbers each time he wants to vote. Moreover, the device 10 when acting as a televoting card has the possibility of renewing the telephone numbers that are called via its DTMF recording mechanism (14, 16, 18, memory 20,22).

When the device 10 is used as an electronic televoting card, by pressing the first key 26 there is the possibility of calling a number which corresponds to the first answer to the question which is placed for answering via televoting. Respectively the second key 28 corresponds to the second answer of the question that is placed for answer and so on. Naturally as it is understandable, the correspondence of keys to answers can be different or even be achieved by pressing combinations of the device's keys and the duration of the press of each key.

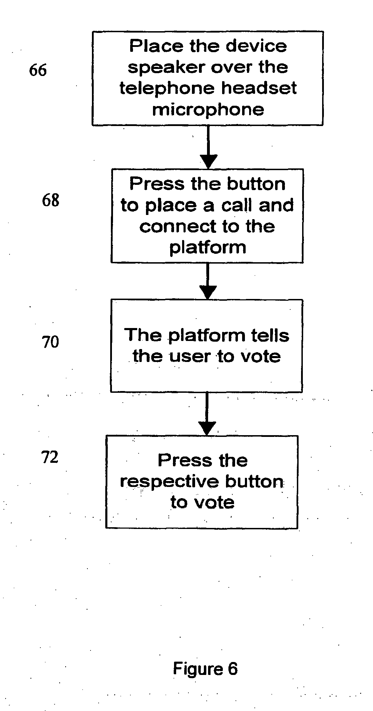

Referring to figure 6, there is shown a flow diagram of the steps in using device 10 as an electronic tele voting card. At step 66 the user places the device 10 adjacent to a telephone as before, at step 68 the user presses the button to place a call and connects to the platform 38. At step 70 the platform tells the user to vote and at step 72 the user presses the appropriate button on device 10 (and/or telephone 34) in order to vote.

### Electronic customer identification card

The fourth application of the device 10 is its use for services of identification and/or certification of users/customers. In order for companies or individuals to identify/certify their users/customers, a simple and quick way is required. Usually, the certifications are realized physically, that is to say with the presence and the confirmation of the user/customer identity, or electronically with the certification of the user/customer by means of a username-password or a digital certificate. It is a trivial process, which however presents important difficulties and becomes extremely laborious and time consuming in its realization, when the transaction takes place over the telephone set.

When the device 10 is used as an electronic card of identification and/or certification of users/clients, it has the advantage that by pressing a key 26, 28 the user can call the access number of the service that he wishes to use, while by pressing of another key (or actuating then device 10 a predefined way) he can send to the platform 38 a PIN number which might be a long, difficult to intercept and memorize PIN number. Hence, using device 10 the user is not required to memorize the PIN. In addition, the disclosure of PIN code during the transaction is not required (e.g. the service provider company does not reveal the PIN number, which has been given to the client). Moreover the card has the possibility of renewing the access numbers as well as the possibility of changing the PIN after each transaction, via its DTMF recording mechanism (14, 16, 18, memory 20,22).

When the device is used as an electronic card of identification or/and certification of users/clients, by pressing the first key 26 there is the possibility of calling the access number that the user wishes to use, while with the press of another key 28 the user sends the multi-digit PIN to the service platform.

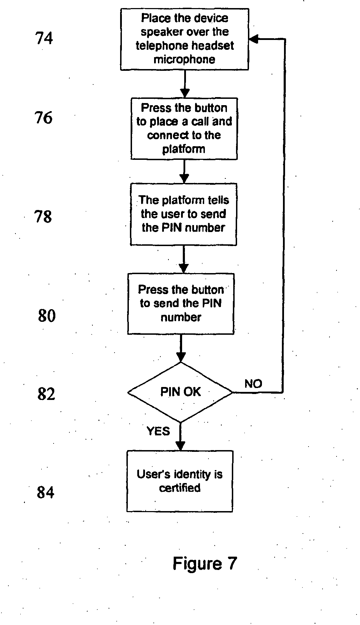

The flow diagram of steps taken in using device 10 in this matter are shown in figure 7. At step 74 the user places the device 10 adjacent to a telephone handset as usual, and at step 76 the user presses the appropriate button to call and connect to a platform 38. At step 78 platform 38 tells the user to send a pin number and accordingly the user presses the appropriate button on device 10 as indicated at step 80. The platform 38 determines if the pin is acceptable at step 82; if not the user is returned to the start of the process again at step 74 and alternatively if the pin is acceptable, the user's identity is confirmed and the user can go on to perform other services via telephone network 36 and platform 38.

### Reprogramming

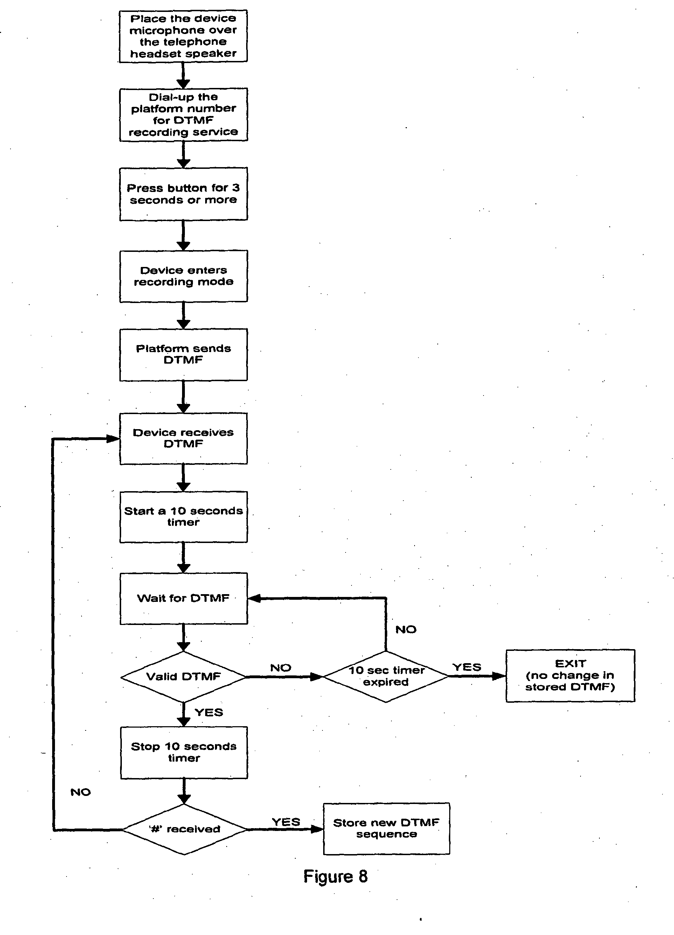

The device 10 provides also the possibility of reprogramming the stored DTMF sequences as shown in outline in Figure 8. This way, the user has the possibility to change the access numbers to the service platform 38 and so to choose a different service provider. In addition, a user has the possibility to change the PIN number, thus increasing the safety of the provided services.

When this device is used as an electronic prepaid calling card, there is the possibility of changing the telephone access number to the service, so the user can choose even a different telecommunication provider. Moreover it is possible to renew the time or the credit units of available telephony time of the electronic prepaid calling card.

Generally, when the user wants to reprogram a sequence, for example by keeping pressed the respective key for time longer than that of regular use (e.g. more than 3 seconds) or pressing both buttons 26 and 28 simultaneously, the user places the device 10 in programming mode. In this mode, the indication LED 24 is actuated for example LED 24 blinks with specific frequency, e.g. 1 Hz. In the programming mode, the device 10 records through its microphone, DTMF tones, and after recognition it stores them temporally in its internal memory ROM 22.

A valid sequence of DTMF tones is completed for example with the tone that corresponds to the "#" key of the telephone set, whereon the sequence is stored permanently in the internal memory ROM 22, so that it can be regenerated by pressing the corresponding key. If within a specified time period (e.g. 10 seconds), the card does not recognize a valid DTMF tone, then the process of recording is cancelled and by pressing the corresponding key the last valid DTMF sequence stored, is generated.
1. The user calls either the access number of the prepaid telephony service, (e.g. "807 XXXX or other depending on the country), by pressing the first key 26 of the electronic device 10 or a number for special charge (e.g. one of the form 90... or 0800 for example depending on country and telephony network operator) by a different actuation (e.g. pressing the second key 28 of the electronic device 10) and then gives the PIN number using again his electronic device 10 (e.g. by pressing first key 26 for more than 3 seconds). The platform 38 prompts the user (via recorded messages) to press a certain key (e.g. the "9") on the keypad of his telephone set 34 in order to recharge the credit units/telephony time of his card. Then the platform 38 prompts the user to place the electronic prepaid device 10 in programming mode, for example by keeping pressed the second key 28 for certain time period (e.g. at least 3 seconds), until the indication LED 24 begins to blink. Then, the user should place the microphone of the electronic device 10 in the telephone's loudspeaker (where he regularly places his ear) and waits for the indication LED 24 to turn off. During this process the platform sends a new PIN that is also recorded in the electronic device 10. Then the platform 38 asks from the user to use the electronic device 10 to send back the new PIN for verification. When the new PIN has been verified at the platform 38 the telephone account from which the call has been made is charged with the amount that was credited in the electronic device 10.
2. If a user buys a new prepaid calling card or a time renewal card and gets a new PIN. Using his electronic device 10, he calls the access number to the prepaid telephony service (e.g. 807 XXXX or other) and gives his PIN number using once again his electronic device 10. Then the platform prompts the user to press a certain key (e.g. 9) on his telephone set keypad in order to renew his telephony time. After that, the recharging of credit units/telephony time is carried out with one of the following methods:
   2.1 The platform 38, using the method described in case 1, programs the new PIN (the one of the new prepaid calling card or an other equivalent PIN), to the electronic device 10, or
   2.2 The platform 38 using another method moves the value of units/telephony time of the new PIN in that of the electronic device 10 (therefore a change of the electronic card's PIN is not required).

The cost of credit units/telephony time renewal is charged on the new card (with its direct purchase from the customer) and not on the telephone account, by which the call was made, as in the method described in paragraph (1).

When the device is used as a televoting card, the Mass Media company for certain reasons can prompt its spectators to change the telephone televoting numbers that are stored in the electronic card by calling a platform. The method of renewing the televoting numbers of the televoting card is the following: The user presses a certain key (26, 28) of the electronic televoting device 10 or dials on his telephone set 34 the suitable number in order to call the IN platform 38. The platform 38 prompts the user to press a certain key (e.g. 9) on his telephone set keypad in order to renew his televoting numbers. Then the platform 38 prompts the user to place the device 10 in programming mode, e.g. by keeping pressed a certain key or combination of keys for certain time period (e.g. at least 3 seconds), until the indication LED 24 starts blinking. Then the user should place the microphone 14 of the electronic card on the telephone set loudspeaker (where he regularly places his ear) and waits for the indication LED 24 to turn off. During this process the platform sends a DTMF sequence corresponding to the new televoting numbers, which are recorded in the device 10. Then the platform 38 asks the user to use the electronic device 10 in order to send back the new numbers for verification.

When the device 10 is used as an electronic card of identification or/and certification of users/clients, there is the possibility of changing the telephone access number to the service, so the user can choose even a different service provider. The most important feature of the device 10 is that the user has the possibility to change the PIN number, achieving increased transaction safety. The renewal of the telephone number and PIN is performed in a similar way to that of the electronic prepaid calling card.

The electronic device 10 for certification of users/clients has also the possibility of automatically changing the user's PIN after each transaction, according to a complicated and difficult to be recognized algorithm, providing in this way more safety in transactions.

## Claims

1. An electronic device (10) for generating dual tone multi-frequency (DTMF) telephony signals, for communication over a telephony network (36), the device comprising:
a signal input for detecting an audible DTMF sequence telephony signals;
a signal decoder (16) for converting the detected DTMF sequence for communication with a processor (18);
the processor (18) having a memory (20, 22) for storing a telephony signal corresponding to the converted DTMF sequence and being adapted to drive an output speaker (30);
the speaker (30) drivable directly by the processor (18) using pulse width modulation (PWM) techniques thereby to generate audible DTMF sequence outputs from the stored telephony signal through the speaker (30);
the device (10) being portable and comprising a user interface having a user actuator (26, 28).

2. An electronic device according to claim 1 wherein the device further comprises a status indicator (24).

3. An electronic device according to claims 1 or 2 wherein the user interface comprises a first user actuator and the process or is adapted to enable transmission of at least two telephony signals upon different actuation processes of the user actuator.

4. An electronic device according to claim 1 to 3 wherein the user interface comprises a second user actuator and the processor is adapted to transmit a different telephony signal upon actuation of the second user actuator compared to the first user actuator.

5. An electronic device (10) according to claim 4 wherein the user interface comprises only two users actuators.

6. An electronic device (10) of any preceding claim comprising a signal input, such as a microphone (14) and signal decoder (16), adapted to enable communication of a detected telephony signal to the processor (18) and wherein the processor (18) is reprogrammable thereby enabling storage of a new telephony signal for subsequent communication to the signal output upon actuation by a predetermined user input command via the user interface.

7. An electronic device (10) according to claim 6 wherein the user interface is adapted to enable the user to place the processor (18) in a reprogramming mode thereby to store new telephony signals.

8. The electronic device (10) of any preceding claim wherein the user interface comprises two user input buttons in communication with the processor (18) which processor (18) is adapted to enable communication of two or more output telephony signals, and to enable reprogramming of a stored telephony signal.

9. An electronic device (10) according to any preceding claim adapted to enable use of the device as one or more of an electronic pre paid calling card, an electronic shortcut (or number directory), .an electronic televoting card and/or an electronic card for customer identification.

10. An electronic device (10) according to any preceding claim comprising a body housing the electronic components of the device and being easily handled, for example fitting easily into an adult's palm, and preferably wherein the body defines a first and second face wherein the first face comprises at least part of the user interface and the second face comprises at least part of the output thereby to enable a user to hold the device so as to enable actuation by the user of the device via the user interface and for the device to emit the appropriate telephony signal via the output which is locatable proximal a signal receiving device such as the microphone of a telephone.

11. An electronic device (10) according to claim 10 wherein the second face, comprises a signal input, such as a microphone, which is also locatable in use proximal a telephone speaker thereby to enable input of a telephony signal into a device whilst at the same time the user has access to the user interface.

12. An electronic device (10) according to any preceding claim wherein the device is adapted to enable transmission, through user actuation via the user interface, of one or more telephone numbers, an identification number, and/or a signal representative of a users vote.

13. An electronic device (10) according to claim 2 and any claim dependent thereon wherein the status indicator comprises a simple light output device such as an LED.

14. An electronic device (10) according to claim 13 is adapted to activate the status indicator in a first manner to indicate that device 10 is in a reprogramming mode and in a second manner in order to indicate that the device has successfully been reprogrammed.

15. A method of using an electronic device (10) for generating dual tone multi-frequency (DTMF) telephony signals, for communication over a telephony network (36), the method comprising:
inputting an audible DTMF sequence telephony signals;
converting the detected DTMF sequence for communication with a processor (18) and a signal decoder (16);
the processor (18) having a memory (20, 22) for storing a telephony signal corresponding to the converted DTMF sequence and being adapted to drive an output speaker (30);
the processor (18) directly driving the speaker (30) using pulse width modulation (PWM) techniques thereby to generate audible DTMF sequence outputs from the speaker (30);

16. The method claim 15 further comprising:
reprogramming the electronic device (10) having stored thereon the DTMF sequences, comprising the steps placing the device in a reprogramming mode, receiving a telephony at a device input such as a microphone (14), and storage received telephone signal in a device memory (20, 22).

17. A method according to claim 16 further adapted to enable storage of two or more telephony signals by the device (10) when in a reprogramming mode.

18. The method of any one of claims 15 to 17 further comprising:
using an electronic prepaid calling card with the possibility of telephony talk time/units renewal, **characterized by** the fact that the telephone number to access the service (e.g. 807XXXX or other depending on the country) and the PIN number are produced and transmitted electronically by the press of a corresponding key of the electronic card, while the telephony talk time/units renewal takes place via a suitable process of DTMF tones exchange between the electronic card and the service platform (38) aiming at the reprogramming of PIN.

19. The method of claim 18 wherein the use of the electronic device (10) for generating DTMF sequences, as an electronic card of identification/certification of users/clients, **characterized by** the fact that the telephone access number to the service (e.g. 807XXXX or other) and the PIN number are produced and transmitted electronically by pressing the corresponding key of the electronic card, and they can be reprogrammed via a suitable process of DTMF tones exchange between the electronic card and the service platform (38), in order for the user to have access to different services and to provide increased security given that the PIN can be changed either automatically according to an algorithm or by the platform (38) after each transaction.

20. A device (10) of any of claims 1 to 14 for generating DTMF sequences that allocates keys for the generation of DTMF sequences via loudspeaker, that are used for the calling of telephone numbers via telephone appliance connected to the network of the telephony provider to connect with an intelligent service platform and to send the PIN to the platform (38), capable of having the DTMF sequences reprogrammed via a DTMF exchanging procedure with the platform (38), in which case the new DTMF sequences are recorded in the device (10), wherein the device (10) is used as an electronic prepaid calling card, with the possibility of talk time/units renewal, as an electronic shortcut card of telephone directory, as a televoting card with the possibility of reprogramming the calling televoting numbers and as an electronic card of identification /certification of users/clients with the possibility of renewal the platform's call number, but also the PIN number, after each transaction for increased safety in transactions.

21. A method of any one of claims 15 to 19 for reprogramming an electronic device (10) for generating telephony signal comprising one or more of the following steps:
requiring a user to communicate with a user service platform using the electronic device (10), for example through dialing a requisite telephone number and providing user information such as a PIN in the form of a telephony signal,
providing audible instructions to the user via a telephony network, to enable the user to place the electronic device (10) in a reprogramming mode,
confirming to the user that the device (10) is in a reprogramming mode through a user interface such as a status indicator which might comprise an LED (24) which might be actuated so as to flash in the reprogramming mode,
ceasing reprogramming of the device in the event that a predetermined signal type or size is not detected by the device within a predetermined time, and indicating a change of status of the device to the user such as a different visual signal requiring the user to place to recommence the programming steps,
in the event of successful reception of the reprogramming signal, indicating successful reception to the user via the user interface, such as by a continuous signal from an LED (24) for a predetermined period,
providing an audible command to the user via the telephony network requiring actuation of the device so as to re-transmit the newly received signal for checking by the platform services,
comparing the returned signal with the earlier transmitted signal and either confirming that the signal returned by the device is accurate or requesting the user to re-initiate the reprogramming mode.

## Patentansprüche

1. Elektronisches Gerät (10) zum Erzeugen von Mehrfrequenzwahl (DTMF) - Fernsprechsignalen zur Kommunikation über ein Fernsprechnetz (36), wobei das Gerät aufweist:
einen Signaleingang zum Erfassen einer hörbaren DTMF-Sequenz als Fernsprechsignale;
einen Signaldecodierer (16) zum Umwandeln der erfassten DTMF-Sequenz zur Kommunikation mit einem Prozessor (18);
den Prozessor (18), der einen Speicher (20, 22) zum Speichern eines Fernsprechsignals entsprechend der umgewandelten DTMF-Sequenz aufweist und zum Antreiben eines Ausgangslautsprechers (30) ausgestaltet ist;
den Lautsprecher (30), der durch den Prozessor (18) unter Verwendung von Pulsweitenmodulations (PWM) - Techniken direkt antreibbar ist, um dadurch aus dem gespeicherten Fernsprechsignal durch den Lautsprecher (30) hörbare DTMF-Sequenz-Ausgangssignale zu erzeugen;
wobei das Gerät (10) tragbar ist und eine Benutzerschnittstelle mit einem Benutzerbedienelement (26, 28) aufweist.

2. Elektronisches Gerät nach Anspruch 1, wobei das Gerät ferner eine Statusanzeige aufweist.

3. Elektronisches Gerät nach Ansprüchen 1 oder 2, wobei die Benutzerschnittstelle ein erstes Benutzerbedienelement aufweist und der Prozessor ausgestaltet ist, um bei unterschiedlichen Betätigungsvorgängen des Benutzerbedienelements eine Übertragung von mindestens zwei Fernsprechsignalen zu ermöglichen.

4. Elektronisches Gerät nach Anspruch 1 bis 3, wobei die Benutzerschnittstelle ein zweites Benutzerbedienelement aufweist und der Prozessor ausgestaltet ist, um bei einer Betätigung des zweiten Benutzerbedienelements im Vergleich zum ersten Benutzerbedienelement ein anderes Fernsprechsignal zu übertragen.

5. Elektronisches Gerät (10) nach Anspruch 4, wobei die Benutzerschnittstelle nur zwei Benutzerbedienelemente aufweist.

6. Elektronisches Gerät (10) nach einem vorhergehenden Anspruch, aufweisend einen Signaleingang, wie beispielsweise ein Mikrofon (14), und einen Signaldecodierer (16), der ausgestaltet ist, um eine Kommunikation eines erfassten Fernsprechsignals an den Prozessor (18) zu ermöglichen, und wobei der Prozessor (18) reprogrammierbar ist, um dadurch bei einer Betätigung durch einen vorbestimmten Benutzereingabebefehl über die Benutzerschnittstelle ein Speichern eines neuen Fernsprechsignals für eine nachfolgende Kommunikation an den Signalausgang zu ermöglichen.

7. Elektronisches Gerät (10) nach Anspruch 6, wobei die Benutzerschnittstelle ausgestaltet ist, um es dem Benutzer zu ermöglichen, den Prozessor (18) in einen Reprogrammiermodus zu setzen, um dadurch neue Fernsprechsignale zu speichern.

8. Elektronisches Gerät (10) nach einem vorhergehenden Anspruch, wobei die Benutzerschnittstelle zwei Benutzereingabetasten in Verbindung mit dem Prozessor (18) aufweist, wobei der Prozessor (18) ausgestaltet ist, um eine Kommunikation von zwei oder mehr Ausgangsfernsprechsignale zu ermöglichen und um ein Reprogrammieren eines gespeicherten Fernsprechsignals zu ermöglichen.

9. Elektronisches Gerät (10) nach einem vorhergehenden Anspruch, ausgestaltet, um eine Verwendung des Geräts als eine oder mehrere einer elektronischen Prepaid-Telefonkarte, einer elektronischen Kurzwahl (oder Nummernverzeichnis) - Karte, einer elektronischen Televoting-Karte und/oder einer elektronischen Karte zur Kundenidentifikation zu ermöglichen.

10. Elektronisches Gerät (10) nach einem vorhergehenden Anspruch, aufweisend ein Gehäuse, das die elektronischen Komponenten des Geräts aufnimmt und einfach zu handhaben ist, indem es zum Beispiel leicht in eine Hand eines Erwachsenen passt, und wobei das Gehäuse vorzugsweise eine erste und eine zweite Seite definiert, wobei die erste Seite wenigstens einen Teil der Benutzerschnittstelle aufweist und die zweite Seite wenigstens einen Teil des Ausgangs aufweist, um es dadurch einem Benutzer zu ermöglichen, das Gerät so zu halten, dass eine Betätigung durch den Benutzer des Geräts über die Benutzerschnittstelle und für das Gerät eine Ausgabe des entsprechenden Fernsprechsignals über den Ausgang, der nahe zu einem Signalempfangsgerät wie beispielsweise das Mikrofon eines Telefons platzierbar ist, möglich sind.

11. Elektronisches Gerät (10) nach Anspruch 10, wobei die zweite Seite einen Signaleingang wie beispielsweise ein Mikrofon aufweist, welches bei Gebrauch ebenfalls nahe zu einem Telefonlautsprecher platzierbar ist, um dadurch eine Eingabe eines Fernsprechsignals in ein Gerät zu ermöglichen, während der Benutzer gleichzeitig Zugang zur Benutzerschnittstelle hat.

12. Elektronisches Gerät (10) nach einem vorhergehenden Anspruch, wobei das Gerät ausgestaltet ist, um durch eine Benutzerbetätigung über die Benutzerschnittstelle eine Übertragung einer oder mehrerer Telefonnummern, einer Identifikationsnummer und/oder eines ein Benutzervotum repräsentierenden Signals zu ermöglichen.

13. Elektronisches Gerät (10) nach Anspruch 2 und einem davon abhängigen Anspruch, wobei die Zustandsanzeige eine einfache Lichtausgabevorrichtung wie beispielsweise eine LED aufweist.

14. Elektronisches Gerät (10) nach Anspruch 13, ausgestaltet, um die Statusanzeige in einer ersten Weise zum Anzeigen, dass sich das Gerät (10) in einem Reprogrammiermodus befindet, und in einer zweiten Weise zum Anzeigen, dass das Gerät erfolgreich reprogrammiert worden ist, zu aktivieren.

15. Verfahren zum Benutzen eines elektronischen Geräts (10) zum Erzeugen von Mehrfrequenzwahl (DTMF) - Fernsprechsignalen zur Kommunikation über ein Fernsprechnetz (36), wobei das Verfahren aufweist:
Eingeben einer hörbaren DTMF-Sequenz als Fernsprechsignale;
Umwandeln der erfassten DTMF-Sequenz zur Kommunikation mit einem Prozessor (18) und einem Signaldecodierer (16);
wobei der Prozessor (18) einen Speicher (20, 22) zum Speichern eines der umgewandelten DTMF-Sequenz entsprechenden Fernsprechsignals aufweist und ausgestaltet ist, um einen Ausgangslautsprecher (30) anzutreiben;
wobei der Prozessor (18) den Lautsprecher (30) unter Verwendung von Pulsweitenmodulations (PWM) - Techniken direkt antreibt, um dadurch hörbare DTMF-Sequenz-Ausgangssignale aus dem Lautsprecher (30) zu erzeugen.

16. Verfahren nach Anspruch 15, ferner aufweisend:
Reprogrammieren des elektronischen Geräts (10), auf dem die DTMF-Sequenzen gespeichert sind, mit den Schritten des Setzens des Geräts in einen Reprogrammiermodus, des Empfangens eines Telefonats an einem Geräteeingang wie beispielsweise einem Mikrofon (14), und des Speicherns des empfangenen Fernsprechsignals in einem Gerätespeicher (20, 22).

17. Verfahren nach Anspruch 16, ferner ausgestaltet, um ein Speichern von zwei oder mehr Fernsprechsignalen durch das Gerät (10) zu ermöglichen, wenn es sich in einem Reprogrammiermodus befindet.

18. Verfahren nach einem der Ansprüche 15 bis 17, ferner aufweisend:
Benutzen einer elektronischen Prepaid-Telefonkarte mit der Möglichkeit einer Verlängerung von Fernsprechgesprächszeit/einheiten, **gekennzeichnet durch** die Tatsache, dass die Telefonnummer für einen Zugang zum Dienst (z.B.
807XXXX oder dgl. länderabhängig) und die PIN-Nummer **durch** Drücken einer entsprechenden Taste der elektronischen Karte elektronisch erzeugt und übertragen werden, wobei die Verlängerung der Fernsprechgesprächszeit/einheiten über einen geeigneten Vorgang eines DTMF-Tonaustauschs zwischen der elektronischen Karte und der Service-Plattform (38) mit dem Ziel eines Reprogrammierens der PIN stattfindet.

19. Verfahren nach Anspruch 18, wobei die Benutzung des elektronischen Geräts (10) zum Erzeugen von DTMF-Sequenzen als eine elektronische Karte zur Identifizierung / Zertifizierung von Benutzern / Kunden **gekennzeichnet ist durch** die Tatsache, dass die Telefonzugangsnummer zum Dienst (z.B. 807XXXX oder dgl.) und die PIN-Nummer **durch** Drücken der entsprechenden Taste der elektronischen Karte elektronisch erzeugt und übertragen werden, und sie über einen geeigneten Vorgang eines DTMF-Tonaustauschs zwischen der elektronischen Karte und der Service-Plattform (38) reprogrammiert werden können, um dem Benutzer Zugriff auf verschiedene Dienste zu geben und eine erhöhte Sicherheit vorzusehen, vorausgesetzt dass die PIN nach jeder Transaktion entweder automatisch nach einem Algorithmus oder **durch** die Plattform (38) geändert werden kann.

20. Gerät (10) nach einem der Ansprüche 1 bis 14 zum Erzeugen von DTMF-Sequenzen, welches Tasten für die Erzeugung von DTMF-Sequenzen über Lautsprecher zuweist, die für das Anrufen von Telefonnummern über ein an das Netz des Fernsprechanbieters angeschlossenes Telefongerät benutzt werden, um es mit einer intelligenten Service-Plattform zu verbinden und die PIN an die Plattform (38) zu senden, fähig zum Reprogrammieren der DTMF-Sequenzen über einen DTMF-Austauschprozess mit der Plattform (38), in welchem Fall die neuen DTMF-Sequenzen in dem Gerät (10) aufgezeichnet werden, wobei das Gerät (10) als eine elektronische Prepaid-Telefonkarte mit der Möglichkeit einer Verlängerung der Gesprächszeit/einheiten, als eine elektronische Kuzwahlkarte eines Telefonbuchs, als eine Televoting-Karte mit der Möglichkeit des Reprogrammierens der anzurufenden Televoting-Nummern und als eine elektronische Karte zur Identifizierung / Zertifizierung von Benutzern / Kunden mit der Möglichkeit der Erneuerung der Rufnummer der Plattform, aber auch der PIN-Nummer nach jeder Transaktion für erhöhte Sicherheit bei Transaktionen verwendet wird.

21. Verfahren nach einem der Ansprüche 15 bis 19 zum Reprogrammieren eines elektronischen Geräts (10) zum Erzeugen von Fernsprechsignalen, das einen oder mehrere der folgenden Schritte aufweist:
Auffordern eines Benutzers, mit einer Benutzer-Service-Plattform mittels des elektronischen Geräts (10) zu kommunizieren, zum Beispiel durch Wählen einer erforderlichen Telefonnummer und Bereitstellung von Benutzerinformationen wie beispielsweise einer PIN in der Form eines Fernsprechsignals,
Bereitstellen von hörbaren Anweisungen an den Benutzer über ein Fernsprechnetz, um es dem Benutzer zu ermöglichen, das elektronische Gerät (10) in einen Reprogrammiermodus zu setzen,
Bestätigen an den Benutzer, dass sich das Gerät (10) in einem Reprogrammiermodus befindet, durch eine Benutzerschnittstelle wie beispielsweise eine Statusanzeige, die eine LED (24) aufweisen kann, die so aktiviert werden kann, dass sie im Reprogrammiermodus blinkt,
Beenden des Reprogrammierens des Geräts, falls durch das Gerät innerhalb einer vorbestimmten Zeit kein(e) vorbestimmte(r) Signaltyp oder -größe erfasst wird, und Anzeigen einer Statusänderung des Geräts an den Benutzer wie beispielsweise durch ein anderes sichtbares Signal, wodurch der Benutzer aufgefordert wird, die Programmierschritte wieder zu beginnen,
im Fall eines erfolgreichen Empfangs des Reprogrammiersignals, Anzeigen des erfolgreichen Empfangs an den Benutzer über die Benutzerschnittstelle,
wie beispielsweise durch ein kontinuierliches Signal von einer LED (24) für eine vorbestimmte Zeitdauer,
Bereitstellen einer hörbaren Anweisung an den Benutzer über das Fernsprechnetz, die zu einer Betätigung des Geräts auffordert, um so das neu empfangene Signal zur Überprüfung durch die Plattformdienste erneut zu senden,
Vergleichen des zurückgegebenen Signals mit dem früher übertragenen Signal und entweder Bestätigen, dass das vom Gerät zurückgegebene Signal korrekt ist, oder Auffordern des Benutzers, den Reprogrammiermodus erneut zu starten.

## Revendications

1. Dispositif électronique (10) destiné à générer des signaux de téléphonie multifréquence à double tonalité (DTMF) pour la communication sur un réseau de téléphonie (36), le dispositif comprenant:
une entrée de signaux destinée à détecter des signaux de téléphonie à séquence DTMF audible,
un décodeur de signaux (16) destiné à convertir la séquence DTMF détectée pour la communication avec un processeur (18),
le processeur (18) ayant une mémoire (20, 22) destinée à stocker un signal de téléphonie correspondant à la séquence DTMF convertie et étant adapté pour commander une sortie haut-parleur (30),
le haut-parleur (30) pouvant être commandé directement par le processeur (18) en utilisant des techniques de modulation par largeur d'impulsion (PWM) pour générer, ainsi, des sorties à séquence DTMF audible du signal de téléphonie stocké par l'intermédiaire du haut-parleur (30),
le dispositif (10) étant portable et comprenant une interface utilisateur ayant un actionneur utilisateur (26, 28).

2. Dispositif électronique (10) suivant la revendication 1 comprenant, en outre, un indicateur d'état (24).

3. Dispositif électronique (10) suivant les revendications 1 ou 2, dans lequel l'interface utilisateur comprend un premier actionneur utilisateur et le processeur est adapté pour permettre la transmission d'au moins deux signaux de téléphonie sur différents processus d'activation de l'actionneur utilisateur.

4. Dispositif électronique (10) suivant les revendications 1 à 3, dans lequel l'interface utilisateur comprend un second actionneur utilisateur et le processeur est adapté pour transmettre un signal de téléphonie différent sur activation du second actionneur utilisateur en comparaison avec le premier actionneur utilisateur.

5. Dispositif électronique (10) suivant la revendication 4, dans lequel l'interface utilisateur comprend seulement deux actionneurs utilisateurs.

6. Dispositif électronique (10) suivant une quelconque des revendications précédentes comprenant une entrée de signaux, tel qu'un microphone (14) et un décodeur de signaux (16) adapté pour permettre de communiquer un signal de téléphonie détecté au processeur (18) et dans lequel le processeur (18) est reprogrammable, permettant, ainsi, de stocker un nouveau signal de téléphonie destiné à être communiqué ultérieurement à la sortie de signaux sur activation par une commande d'entrée utilisateur prédéterminée via l'interface utilisateur.

7. Dispositif électronique (10) suivant la revendication 6, dans lequel l'interface utilisateur est adaptée pour permettre à l'utilisateur de placer le processeur (18) dans un mode de reprogrammation pour stocker, ainsi, de nouveaux signaux de téléphonie.

8. Dispositif électronique (10) suivant une quelconque des revendications précédentes, dans lequel l'interface utilisateur comprend deux boutons d'entrée utilisateurs qui communiquent avec le processeur (18), ce dernier étant adapté pour permettre la communication de deux signaux de téléphonie de sortie ou plus et la reprogrammation d'un signal de téléphonie stocké.

9. Dispositif électronique (10) suivant une quelconque des revendications précédentes, adapté pour permettre son utilisation comme un ou plusieurs parmi une carte d'appel prépayée, un raccourci électronique (ou répertoire de numéros), une carte de télévote électronique et/ou une carte électronique d'identification de client.

10. Dispositif électronique (10) suivant une quelconque des revendications précédentes comprenant un corps logeant les composants électroniques du dispositif et étant facilement manipulable, étant donné qu'il tient facilement dans la paume d'un adulte par exemple, et définissant, de préférence, une première et une seconde face, la première face comprenant au moins une partie de l'interface utilisateur et la seconde face comprenant au moins une partie de la sortie, permettant, ainsi, à un utilisateur de tenir le dispositif de manière à pouvoir l'activer via l'interface utilisateur et au dispositif d'émettre le signal de téléphonie approprié via la sortie qui peut être située à proximité d'un dispositif recevant des signaux, tel que le microphone d'un téléphone.

11. Dispositif électronique (10) suivant la revendication 10, dans lequel la seconde face comprend une entrée de signaux, tel qu'un microphone, qui peut également être située, en utilisation, à proximité d'un haut-parleur de téléphone pour permettre l'entrée d'un signal de téléphonie dans le dispositif, alors qu'au même moment l'utilisateur a accès à l'interface utilisateur.

12. Dispositif électronique (10) suivant une quelconque des revendications précédentes, adapté pour permettre la transmission, sur activation par l'utilisateur, via l'interface utilisateur, d'un numéro de téléphone ou plus, d'un numéro d'identification et /ou d'un signal représentatif d'un vote d'utilisateur.

13. Dispositif électronique (10) suivant la revendication 2 et une quelconque des revendications qui en dépendent, dans lequel l'indicateur d'état comprend un simple dispositif émetteur de lumière, tel qu'une LED.

14. Dispositif électronique (10) suivant la revendication 13 qui est adapté pour activer l'indicateur d'état d'une première façon pour indiquer qu'il est dans un mode de reprogrammation et d'une seconde façon pour indiquer qu'il a été reprogrammé avec succès.

15. Procédé d'utilisation d'un dispositif électronique (10) pour générer des signaux de téléphonie multifréquence à double tonalité (DTMF) pour la communication sur un réseau de téléphonie (36), le procédé comprenant:
l'entrée de signaux de téléphonie à séquence DTMF audible,
la conversion de la séquence DTMF détectée pour la communication avec un processeur (18) et un décodeur de signaux (16),
le processeur (18) ayant une mémoire (20, 22) pour stocker un signal de téléphonie correspondant à la séquence DTMF convertie et étant adapté pour commander un haut-parleur de sortie (30),
le processeur (18) commandant directement le haut-parleur (30) en utilisant des techniques de modulation par largeur d'impulsion (PWM) pour générer, ainsi, des sorties à séquence DTMF audible depuis le haut-parleur (30).

16. Procédé suivant la revendication 15 comprenant en plus:
la reprogrammation du dispositif électronique (10), sur lequel sont stockées les séquences DTMF, reprogrammation qui comprend les étapes consistant à placer le dispositif dans un mode de reprogrammation, à recevoir un signal de téléphonie à une entrée du dispositif, tel qu'un microphone (14) et à stocker le signal de téléphonie reçu dans une mémoire du dispositif (20, 22).

17. Procédé suivant la revendication 16, adapté, en outre, à permettre le stockage de deux signaux de téléphonie ou plus par le dispositif (10) lorsqu'il est en mode de reprogrammation.

18. Procédé suivant une quelconque des revendications 15 à 17 comprenant, en outre: l'utilisation d'une carte d'appel prépayée avec possibilité de renouvellement de temps/d'unités de communication téléphonique, **caractérisé par le fait que** le numéro téléphonique d'accès au service (p.ex. 807XXXX ou autre en fonction du pays) et le numéro PIN sont produits et transmis électroniquement en appuyant sur une touche correspondante de la carte électronique pendant que le renouvellement de temps/d'unités de communication téléphonique a lieu via un processus adapté d'échange de tonalités DTMF entre la carte électronique et la plateforme de service (38) visant la reprogrammation du PIN.

19. Procédé, suivant la revendication 18, d'utilisation du dispositif électronique (10) destiné à générer des séquences DTMF comme carte électronique d'identification/de certification d'utilisateurs/de clients, **caractérisé par le fait que** le numéro téléphonique d'accès au service (p.ex. 807XXXX ou autre) et le numéro PIN sont produits et transmis électroniquement en appuyant sur la touche correspondante de la carte électronique et peuvent être reprogrammés via un processus approprié d'échange de tonalités DTMF entre la carte électronique et la plateforme de service (38) de manière que l'utilisateur a accès à différents services et à assurer une sécurité accrue, étant donné que le PIN peut être changé soit automatiquement suivant un algorithme ou par la plateforme (38) après chaque transaction.

20. Dispositif (10) suivant une quelconque des revendications 1 à 14, destiné à générer des séquences DTMF, qui attribue des touches à la génération de séquences DTMF via haut-parleur, touches qui sont utilisées pour appeler des numéros de téléphone via un appareil téléphonique raccordé au réseau du fournisseur de téléphonie pour la connexion à une plateforme de services intelligente et l'envoi du PIN à la plateforme (38), et qui est capable d'avoir les séquences DTMF reprogrammées via une procédure d'échange DTMF avec la plateforme (38), auquel cas, les nouvelles séquences DTMF sont mémorisées dans le dispositif (10), qui est utilisé comme carte électronique d'appel prépayée avec possibilité de renouvellement du temps/des unités de communication, comme carte de raccourci électronique d'un répertoire téléphonique, comme carte de télévote avec la possibilité de reprogrammation des numéros de télévote appelants et comme carte électronique d'identification/de certification d'utilisateurs/de clients avec possibilité de renouvellement du numéro d'appel de la plateforme, mais aussi du numéro PIN, après chaque transaction au titre d'une sécurité accrue des transactions.

21. Procédé suivant une quelconque des revendications 15 à 19, destiné à reprogrammer un dispositif électronique (10) servant à générer un signal de téléphonie comprenant une ou plusieurs des étapes suivantes consistant à:
demander à un utilisateur de communiquer avec une plateforme de service utilisateur en utilisant le dispositif électronique (10), par exemple en composant un numéro de téléphone utile et en fournissant des informations utilisateurs, tel qu'un PIN sous forme de signal de téléphonie,
fournir à l'utilisateur d'instructions audibles via le réseau de téléphonie lui permettant de placer le dispositif électronique (10) dans un mode de reprogrammation,
confirmer à l'utilisateur que le dispositif (10) est dans un mode de reprogrammation par l'intermédiaire d'une interface utilisateur tel qu'un indicateur d'état qui pourrait comprendre une LED (24) qui pourrait être activée de manière qu'elle clignote en mode de reprogrammation,
cesser la reprogrammation du dispositif dans le cas où il n'y a pas de détection par le dispositif d'un type ou d'une taille de signal prédéterminés dans un délai déterminé, et indiquer à l'utilisateur un changement d'état du dispositif, tel qu'un signal visuel différent demandant à l'utilisateur de recommencer les étapes de programmation,
en cas de réception réussie du signal de reprogrammation, indiquer la réception réussie à l'utilisateur via l'interface utilisateur, par exemple par un signal continu émis par une LED (24) pendant une période de temps prédéterminée,
fournir à l'utilisateur une commande audible via le réseau de téléphonie demandant l'activation du dispositif de sorte à retransmettre le nouveau signal reçu pour vérification par les services de la plateforme,
comparer le signal retourné au signal transmis précédemment et soit confirmer que le signal retourné par le dispositif est exact, soit demander à l'utilisateur de réinitialiser le mode de reprogrammation.
